# EUROPEAN PATENT APPLICATION

(11) **EP 2 738 046 A1**
(43) Date of publication of application: **04.06.2014**
(21) Application number: 13193888.8
(22) Date of filing: 21.11.2013
(51) Int. Cl.: B60R 16/02, F16L 3/10, H02G 3/06, H02G 3/34

(54) **Corrugated tube clamp**

(30) Priority: 30.11.2012 JP 2012261938
(71) Applicant: DAIWA KASEI KOGYO KABUSHIKI KAISHA, Okazaki-shi, Aichi-ken (JP)
(72) Inventor: Asai, Osamu, Aichi-ken (JP)
(74) Representative: Baumgärtel, Gunnar

(57) **Abstract**

A corrugated tube clamp (1) including a fixed portion (10)capable of being connected to an attaching object, a movable portion (30) hinged to the fixed portion (10), ribs (12a,32a)respectively formed in the fixed portion(10) and the movable portion (30), and at least one biasing member (40) formed in at least one of the fixed portion (10) and the movable portion (30). The ribs (12a,32a) are respectively shaped to engage grooves formed in an outer circumferential surface of each of the corrugated tubes of different diameters. The at least one biasing member (40) is shaped to be pressed back by an outer circumferential surface of at least the corrugated tube with the smallest diameter when it is clamped between the fixed portion (10) and the movable portion (30).

## Description

The present invention relates to a corrugated tube clamp that is used to attach a corrugated tube to a plate-shaped attaching object (e.g., a vehicle body panel). More specifically, the present invention relates to a corrugated tube clamp that is applicable to various corrugated tubes respectively having different diameters.

A corrugated tube clamp that is used to attach a corrugated tube into which a wiring harness is inserted to a vehicle body panel is already known. Such a corrugated tube clamp is taught by, for example, Japanese Laid-Open Patent Publication Number 2007-143309. As shown in FIG. 8, a corrugated tube clamp 201 taught therein includes a tube clamping body 202 that is essentially composed of a fixed portion 210 and a movable portion 230. The fixed portion 210 and the movable portion 230 are shaped to clamp each of corrugated tubes 204, 205 and 206 having different diameters (a large diameter, a middle diameter and a small diameter).

The fixed portion 210 has an engagement strip 214. Conversely, the movable portion 230 has three engagement claws 234, 236 and 238 that are capable of engaging the engagement strip 214 of the fixed portion 210. Therefore, the corrugated tube clamp 201 can accommodate the corrugated tubes 204, 205 and 206 having different diameters (the large diameter, the middle diameter and the small diameter). Thus, the corrugated tubes 204, 205 and 206 that are different from each other in diameter can be held by the same corrugated tube clamp 201. This means that it is not necessary to use various corrugated tube clamps in order to hold the corrugated tubes 204, 205 and 206.

Further, in the known corrugated tube clamp 201 taught by Japanese Laid-Open Patent Publication Number 2007-143309, the fixed portion 210 of the tube clamping body 202 has ribs 212a that are formed along an inner circumferential surface 212 thereof. Also, the movable portion 230 of the tube clamping body 202 has ribs 232a that are formed along an inner circumferential surface 232 thereof. The ribs 212a and 232a are respectively shaped such that inner circumferential surfaces 212b and 232b thereof correspond to bottom surfaces 204c of grooves 204b (which will be referred to as outer circumferential depressed surfaces 204c) that are generally formed at equal intervals in an outer circumferential surface 204a of the large diameter corrugated tube 204.

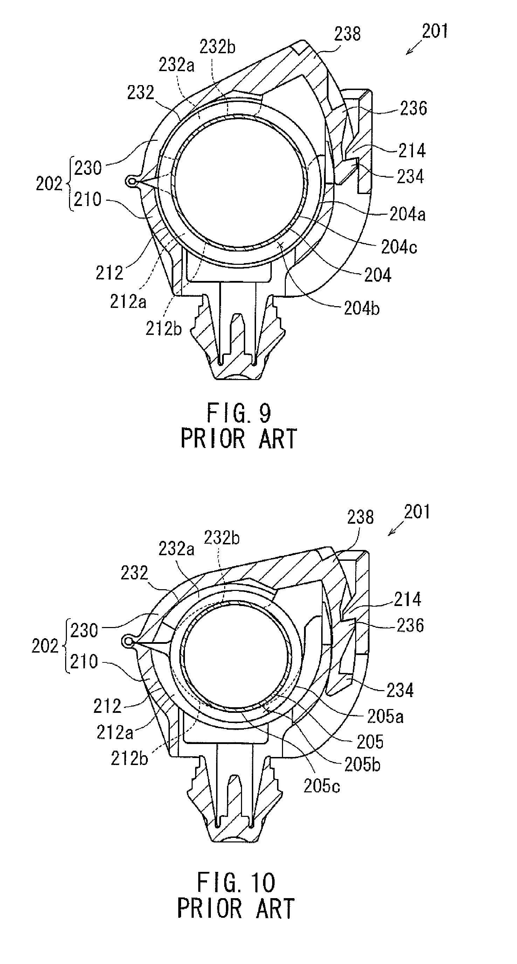

Therefore, as shown in FIG. 9, when the large diameter corrugated tube 204 is held by the tube clamping body 202 in order to attach the large diameter corrugated tube 204 to the vehicle body panel using the corrugated tube clamp 201, the inner circumferential surfaces 212b and 232b of the ribs 212a and 232a formed in the tube clamping body 202 can adjacently contact the outer circumferential depressed surfaces 204c formed in the corrugated tube 204. As a result, the clamped corrugated tube 204 held by the tube clamping body 202 can be stabilized. Therefore, when the corrugated tube 204 is attached to the vehicle body panel using the corrugated tube clamp 201 and the corrugated tube 204 is subjected to external forces, inclination or displacement of the corrugated tube 204 will be minimized. Thus, the corrugated tube 204 can be effectively maintained in a predetermined attached position on the vehicle body panel.

However, as shown in FIG. 10, when the middle diameter corrugated tube 205 is held by the tube clamping body 202 in order to attach the middle diameter corrugated tube 205 to the vehicle body panel using the corrugated tube clamp 201, the inner circumferential surfaces 212b and 232b of the ribs 212a and 232a formed in the tube clamping body 202 can contact outer circumferential depressed surfaces 205c formed in the corrugated tube 205 in a substantially point contact manner. As a result, the corrugated tube 205 held by the tube clamping body 202 cannot be stabilized. Therefore, when the corrugated tube 205 is subjected to external forces, the corrugated tube 205 can be easily inclined or displaced. This means that the corrugated tube 205 cannot be maintained in a predetermined attached position on the vehicle body panel.

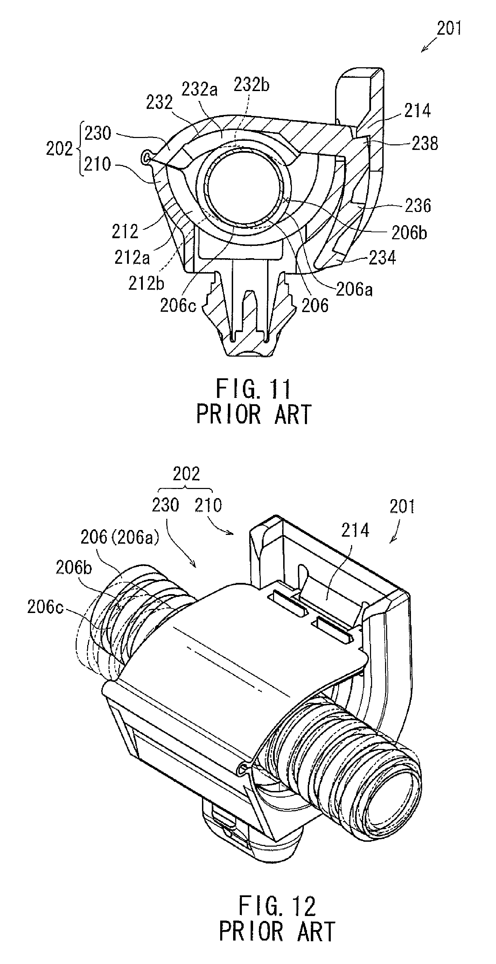

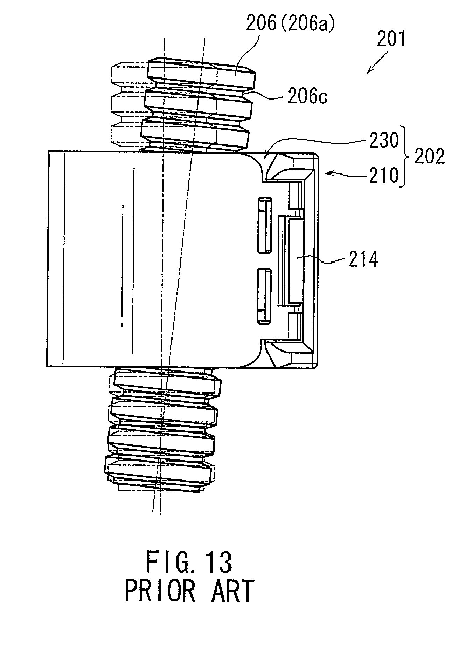

Similarly, as shown in FIG. 11, when the small diameter corrugated tube 206 is held by the tube clamping body 202 in order to attach the small diameter corrugated tube 206 to the vehicle body panel using the corrugated tube clamp 201, the inner circumferential surfaces 212b and 232b of the ribs 212a and 232a formed in the tube clamping body 202 can contact outer circumferential depressed surfaces 206c of grooves 206b formed in the corrugated tube 206 in a substantially point contact manner. As a result, the corrugated tube 206 held by the tube clamping body 202 cannot be stabilized. Therefore, when the corrugated tube 206 is subjected to external forces, the corrugated tube 206 can be easily inclined or displaced. In particular, the corrugated tube 206 can be easily displaced from a normal position shown by broken lines in FIGS. 12 and 13 to a position shown by solid lines in FIGS. 12 and 13. This means that the corrugated tube 206 cannot be maintained in a predetermined attached position on the vehicle body panel.

It is, accordingly, one object of the present invention to provide an improved corrugated tube clamp.

In one aspect of the present invention, a corrugated tube clamp may includes a fixed portion capable of being connected to an attaching object, a movable portion hinged to the fixed portion, ribs respectively formed in the fixed portion and the movable portion, and at least one biasing member formed in at least one of the fixed portion and the movable portion. The fixed portion and the movable portion are shaped to clamp and hold each of corrugated tubes of different diameters therebetween. The ribs are respectively shaped to engage grooves formed in an outer circumferential surface of each of the corrugated tubes having different diameters. The at least one biasing member is shaped to be pressed back by an outer circumferential surface of at least the corrugated tube with the smallest diameter when it is clamped between the fixed portion and the movable portion.

According to the corrugated tube clamp thus constructed, when each of the corrugated tubes is clamped between the fixed portion and the movable portion, the at least one biasing member can be pressed back by the outer circumferential surface of each of the corrugated tubes, so as to be elastically flexed outwardly. At this time, the at least one biasing member can be subjected to a pressing (action) force from the outer circumferential surface of each of the corrugated tubes. As a result, a reaction force can be exerted on the outer circumferential surface of each of the corrugated tubes via the at least one biasing member. Thus, each of the corrugated tubes clamped between the fixed portion and the movable portion can be stabilized due to the reaction force. Therefore, even when each of the corrugated tubes is subjected to external forces, it can be effectively prevented from being easily inclined or displaced. As a result, when each of the corrugated tubes is attached to the attaching object using the corrugated tube clamp, it can be maintained in a predetermined attached position on the attaching object.

Further, according to the corrugated tube clamp, each of the corrugated tubes can be prevented from rattling or moving between the fixed portion and the movable portion due to the reaction force applied to the outer circumferential surface of each of the corrugated tubes.

Other objects, features and advantages of embodiments of the present invention will be readily understood after reading the following detailed description together with the accompanying drawings and the claims.
FIG. 1 is a perspective view of a corrugated tube clamp according to a first representative embodiment of the present invention, which illustrates a condition in which a tube clamping body thereof is opened;
FIG. 2 is a vertical cross-sectional view of the corrugated tube clamp, which illustrates a condition in which a large diameter corrugated tube is clamped and held by the tube clamping body thereof;
FIG. 3 is a vertical cross-sectional view of the corrugated tube clamp, which illustrates a condition in which a middle diameter corrugated tube is clamped and held by the tube clamping body thereof;
FIG. 4 is a vertical cross-sectional view of the corrugated tube clamp, which illustrates a condition in which a small diameter corrugated tube is clamped and held by the tube clamping body thereof;
FIG. 5 is a perspective view of the corrugated tube clamp, which illustrates a condition in which the small diameter corrugated tube is clamped and held by the tube clamping body thereof;
FIG. 6 is a plan view of FIG. 5;
FIG. 7 is a perspective view of a corrugated tube clamp according to a second representative embodiment of the present invention, which illustrates a condition in which a small diameter corrugated tube is clamped and held by a tube clamping body thereof;
FIG. 8 is a perspective view of a conventional corrugated tube clamp, which illustrates a condition in which a tube clamping body thereof is opened;
FIG. 9 is a vertical cross-sectional view of the conventional corrugated tube clamp, which illustrates a condition in which a large diameter corrugated tube is clamped and held by the tube clamping body thereof;
FIG. 10 is a vertical cross-sectional view of the conventional corrugated tube clamp, which illustrates a condition in which a middle diameter corrugated tube is clamped and held by the tube clamping body thereof;
FIG. 11 is a vertical cross-sectional view of the conventional corrugated tube clamp, which illustrates a condition in which a small diameter corrugated tube is clamped and held by the tube clamping body thereof;
FIG. 12 is a perspective view of the conventional corrugated tube clamp, which illustrates a condition in which the small diameter corrugated tube is clamped and held by the tube clamping body thereof; and
FIG. 13 is a plan view of FIG. 12.

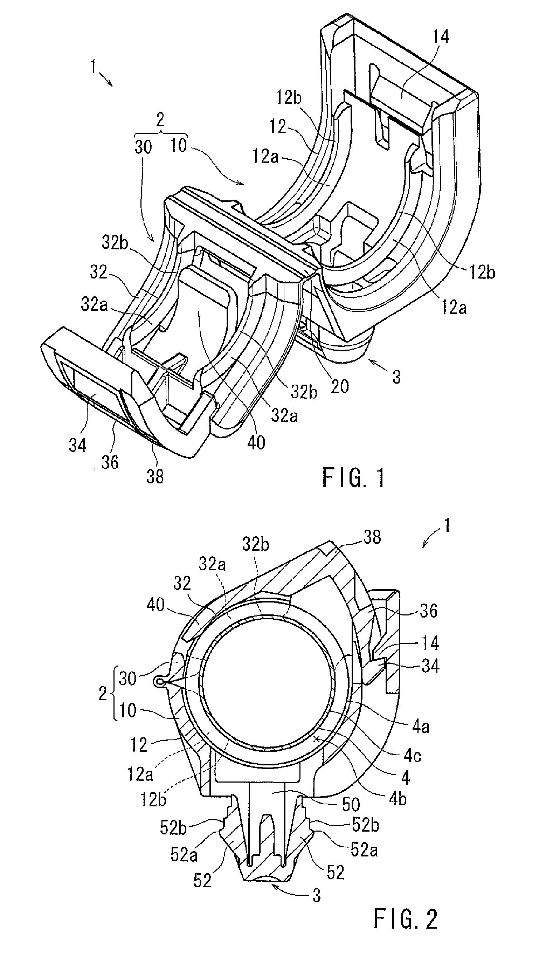

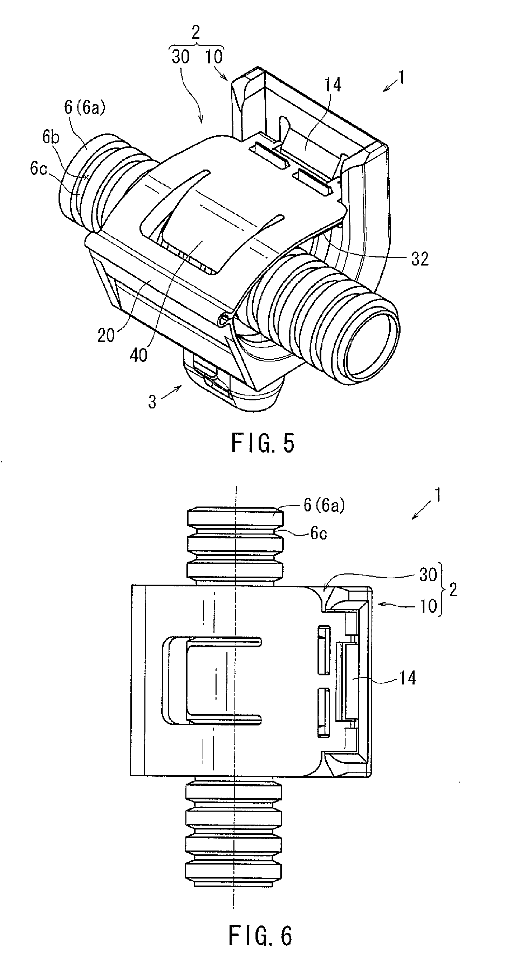

Detailed representative embodiments of the present invention are shown in FIGS. 1 to 7.

### First Embodiment

A first detailed representative embodiment of the present invention will be described with reference to FIGS. 1 to 6.

The present embodiment is directed to a corrugated tube clamp 1 that is used to attach each of corrugated tubes 4, 5 and 6 into which wiring harnesses (not shown) are respectively inserted to an attaching object, e.g., a vehicle body panel (not shown). The clamp 1 may preferably be integrally formed of rigid synthetic resin.

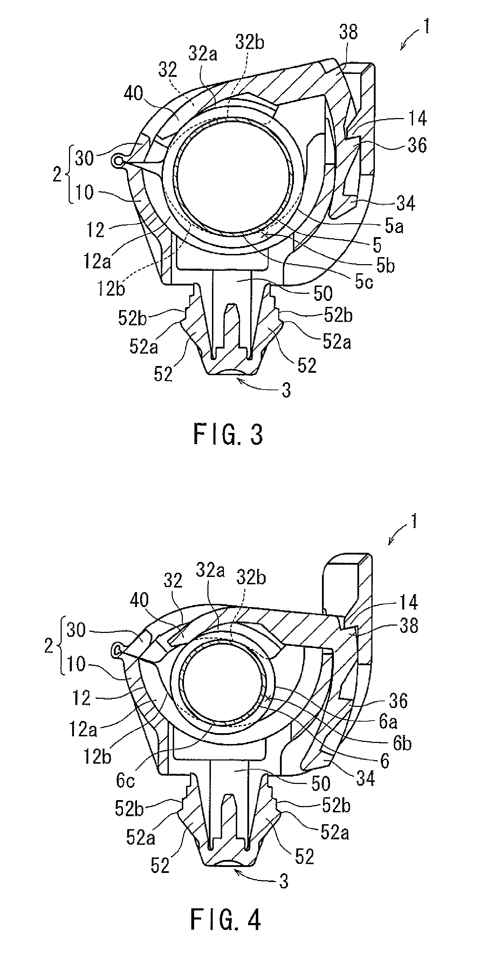

In this embodiment, the corrugated tubes 4, 5 and 6 may respectively have the substantially same structures with the exception of their diameters. For the purpose of explanation, the corrugated tubes 4, 5 and 6 may respectively be referred to as a large (largest) diameter corrugated tube, a middle diameter corrugated tube and a small (smallest) diameter corrugated tube. As shown in FIG. 2, the large diameter corrugated tube 4 may have annular grooves 4b that are circumferentially formed in an outer circumferential surface 4a thereof at equal intervals. The annular grooves 4b may respectively have annular bottom surfaces 4c. Further, the annular bottom surfaces 4c may be referred to as "outer circumferential depressed surfaces 4c." Similarly, as shown in FIG. 3, the middle diameter corrugated tube 5 may have annular grooves 5b that are circumferentially formed in an outer circumferential surface 5a thereof at equal intervals. The annular grooves 5b may respectively have annular bottom surfaces 5c. The annular bottom surfaces 5c may be referred to as "outer circumferential depressed surfaces 5c." Similarly, as shown in FIGS. 4 to 6, the small diameter corrugated tube 6 may have annular grooves 6b that are circumferentially formed in an outer circumferential surface 6a thereof at equal intervals. The annular grooves 6b may respectively have annular bottom surfaces 6c. The annular bottom surfaces 6c may be referred to as "outer circumferential depressed surfaces 6c."

As shown in FIG. 1, the corrugated tube clamp 1 may include a tube clamping body 2 and an attachment leg or anchor 3. The tube clamping body 2 may function to clamp and hold each of the corrugated tubes 4, 5 and 6. The tube clamping body 2 may be essentially composed of a fixed portion 10 and a movable portion 30. The movable portion 30 may be movabley or rotatably connected to the fixed portion 10 via a hinge 20 in such a way that the tube clamping body 2 can be closed and opened. The fixed portion 10 and the movable portion 30 may be shaped to be capable of clamping each of the large, middle and small diameter corrugated tubes 4, 5 and 6 therebetween.

In particular, as shown in FIG. 1, the fixed portion 10 may preferably have a substantially semi-circular shape and have an arcuate or concave inner circumferential surface 12. The inner circumferential surface 12 may preferably be shaped to correspond to curvature of the outer circumferential surface 4a of the large diameter corrugated tube 4.

Further, the fixed portion 10 may have a pair of curved ribs 12a that are formed along the inner circumferential surface 12 thereof. The ribs 12a may be arranged and constructed to engage the annular grooves 4b of the large diameter corrugated tube 4. Further, the ribs 12a may respectively be shaped such that inner circumferential surfaces 12b thereof may correspond to the curvature of the outer circumferential depressed surfaces 4c of the large diameter corrugated tube 4. In particular, the ribs 12a may respectively be shaped such that the inner circumferential surfaces 12b thereof may have the substantially same curvature as the outer circumferential depressed surfaces 4c of the large diameter corrugated tube 4.

Conversely, as shown in FIG. 1, the movable portion 30 may have an arcuate or concave inner circumferential surface 32. The inner circumferential surface 32 may preferably be shaped to correspond to the curvature of the outer circumferential surface 4a of the large diameter corrugated tube 4.

Further, the movable portion 30 may have a pair of curved ribs 32a that are formed along the inner circumferential surface 32 thereof. The ribs 32a may be arranged and constructed to engage the annular grooves 4b of the large diameter corrugated tube 4. Further, the ribs 32a may be respectively shaped such that inner circumferential surfaces 32b thereof may correspond to the curvature of the outer circumferential depressed surfaces 4c of the large diameter corrugated tube 4. In particular, the ribs 32a may respectively be shaped such that the inner circumferential surfaces 32b thereof may have substantially the same curvature as the outer circumferential depressed surfaces 4c of the large diameter corrugated tube 4. Further, the ribs 32a may respectively be formed so as to be positioned opposite the ribs 12a of the fixed portion 10 when the movable portion 30 is rotated about the hinge 20 in order to close the tube clamping body 2.

Thus, when the large diameter corrugated tube 4 is clamped between the fixed portion 10 and the movable portion 30, the ribs 12a of the fixed portion 10 and the ribs 32a of the movable portion 30 can respectively engage the annular grooves 4b of the large diameter corrugated tube 4. As a result, the large diameter corrugated tube 4 can be securely held by the tube clamping body 2, so as to be effectively prevented from moving in an axial direction thereof (in a lateral or widthwise direction of the tube clamping body 2). Further, the ribs 12a of the fixed portion 10 and the ribs 32a of the movable portion 30 can respectively engage not only the annular grooves 4b of the large diameter corrugated tube 4 but also the annular grooves 5b of the middle diameter corrugated tube 5 and the annular grooves 6b of the small diameter corrugated tube 6. Therefore, the same is true of the middle diameter corrugated tube 5 and the small diameter corrugated tube 6.

In addition, the fixed portion 10 may have an engagement strip 14 that is formed therein. Conversely, the movable portion 30 may have first to third engagement claws 34, 36 and 38 that are formed in series. The first to third engagement claws 34, 36 and 38 formed in the movable portion 30 may be arranged and constructed to optionally engage the engagement strip 14 of the fixed portion 10 depending on the diameters of the large, middle and small diameter corrugated tubes 4, 5 and 6 when each of these corrugated tubes 4, 5 and 6 is clamped between the fixed portion 10 and the movable portion 30. Therefore, the tube clamping body 2 can be appropriately fastened while each of these corrugated tubes 4, 5 and 6 is clamped between the fixed portion 10 and the movable portion 30. Thus, the tube clamping body 2 can securely hold each of the corrugated tubes 4, 5 and 6 that are different in diameter.

Further, the movable portion 30 may have a biasing member 40 that is formed in a widthwise central portion thereof. The biasing member 40 may be formed as a cantilevered strip that is projected inwardly beyond the inner circumferential surface 32 of the movable portion 30. Thus, as shown in FIG. 2, when the large diameter corrugated tube 4 is clamped between the fixed portion 10 and the movable portion 30, the biasing member 40 can be elastically pressed against the outer circumferential surface 4a of the large diameter corrugated tube 4. In other words, the biasing member 40 can be pressed back by the outer circumferential surface 4a of the large diameter corrugated tube 4, so as to be elastically flexed outwardly. The same is true of the middle diameter corrugated tube 5 and of the small diameter corrugated tube 6 (FIGS. 3 and 4).

The anchor 3 of the corrugated tube clamp 1 is configured to be inserted into and engaged with an attachment hole (not shown) formed in the attaching object. As shown in FIGS. 2 to 4, the anchor 3 may principally be composed of a pillar 50 vertically extending downward from the fixed portion 10 of the tube clamping body 2 and a pair of engagement strips 52 that are respectively connected to a distal end of the pillar 50. In particular, the engagement strips 52 are respectively positioned opposite the pillar 50, so as to be projected obliquely upward (toward the fixed portion 10) and outward from the distal end of the pillar 50. That is, the engagement strips 52 may respectively be formed as cantilevered strips each having a proximal end and a distal end (a free end). The engagement strips 52 thus formed can be flexed toward and away from each other across the pillar 50 about the distal end of the pillar 50.

Further, each of the engagement strips 52 may have an engagement portion that is formed in the distal end thereof. The engagement portion may include an engagement projection 52a and a recessed or notched portion 52b that is positioned adjacent to the engagement projection 52a.

When the anchor 3 is pushed into the attachment hole formed in the attaching object, the engagement strips 52 can be introduced into the attachment hole while being flexed towards each other. When the engagement projection 52a of each of the engagement strips 52 passes through the attachment hole, the engagement strips 52 can be restored or flexed away from each other, so that the notched portion 52b of each of the engagement strips 52 can engage a circumferential surface of the attachment hole. As a result, the anchor 3 can be connected to the attaching object. Thus, the tube clamping body 2 (the corrugated tube clamp 1) can be attached to the attaching object via the anchor 3.

A representative method for attaching the corrugated tube 4, 5 and 6 to the attaching object using the corrugated tube clamp 1 will now be described. In particular, a representative method for holding the corrugated tube 4, 5 and 6 by the tube clamping body 2 of the corrugated tube clamp 1 will now be described.

In order to attach the large diameter corrugated tube 4 to the attaching object using the corrugated tube clamp 1, the large diameter corrugated tube 4 may be positioned on the fixed portion 10 of the tube clamping body 2. Thereafter, the movable portion 30 may be rotated about the hinge 20 to close the tube clamping body 2. As a result, as shown in FIG. 2, the first engagement claw 34 formed in the movable portion 30 can engage the engagement strip 14 of the fixed portion 10, so that the tube clamping body 2 can be fastened. Thus, the large diameter corrugated tube 4 can be clamped between the fixed portion 10 and the movable portion 30, so as to be held by the tube clamping body 2.

Subsequently, the anchor 3 may be pushed into the attachment hole formed in the attaching object until the notched portion 52b of each of the engagement strips 52 can engage a circumferential surface of the attachment hole. Upon engagement of the notched portion 52b, the anchor 3 can be connected to the attaching object, so that the tube clamping body 2 (the corrugated tube clamp 1) can be attached to the attaching object. Thus, the large diameter corrugated tube 4 can be attached to the attaching object via the corrugated tube clamp 1.

Further, as previously described, when the large diameter corrugated tube 4 is clamped between the fixed portion 10 and the movable portion 30, the ribs 12a of the fixed portion 10 and the ribs 32a of the movable portion 30 can respectively engage the annular grooves 4b of the large diameter corrugated tube 4. Therefore, the large diameter corrugated tube 4 can be effectively prevented from moving in the axial direction thereof.

Further, as previously described, the inner circumferential surfaces 12b and 32b of the ribs 12a and 32a may be shaped to correspond to the outer circumferential depressed surfaces 4c of the large diameter corrugated tube 4. Therefore, the inner circumferential surfaces 12b and 32b of the ribs 12a and 32a can contact the outer circumferential depressed surfaces 4c of the large diameter corrugated tube 4 over substantially the entire length thereof. That is, the inner circumferential surfaces 12b and 32b of the ribs 12a and 32a can adjacently contact the outer circumferential depressed surfaces 4c of the large diameter corrugated tube 4. As a result, the large diameter corrugated tube 4 held by the tube clamping body 2 can be stabilized. Therefore, even when the large diameter corrugated tube 4 is subjected to external forces, the large diameter corrugated tube 4 can be effectively prevented from being inclined or displaced with respect to the tube clamping body 2. As a result, the large diameter corrugated tube 4 can be maintained in a predetermined attached position on the attaching object.

Further, in this condition, the biasing member 40 formed in the movable portion 30 can be pressed back outwardly by the outer circumferential surface 4a of the large diameter corrugated tube 4, so as to be elastically flexed outwardly. At this time, the biasing member 40 can be subjected to a substantial pressing (action) force from the outer circumferential surface 4a of the large diameter corrugated tube 4. As a result, a reaction force (which will be referred to as a biasing member reaction force) can be exerted on the outer circumferential surface 4a of the large diameter corrugated tube 4 via the biasing member 40. Thus, the large diameter corrugated tube 4 held by the tube clamping body 2 can be further stabilized due to the biasing member reaction force. As a result, the large diameter corrugated tube 4 can be further effectively prevented from being inclined or displaced. In addition, the large diameter corrugated tube 4 can be prevented from rattling or moving in the tube clamping body 2.

Conversely, in order to attach the middle diameter corrugated tube 5 to the attaching object using the corrugated tube clamp 1, the middle diameter corrugated tube 5 may be positioned on the fixed portion 10 of the tube clamping body 2. Thereafter, the movable portion 30 may be rotated about the hinge 20 so as to close the tube clamping body 2. As a result, as shown in FIG. 3, the second engagement claw 36 formed in the movable portion 30 can engage the engagement strip 14 of the fixed portion 10, so that the tube clamping body 2 can be fastened. Thus, the middle diameter corrugated tube 5 can be clamped between the fixed portion 10 and the movable portion 30, so as to be held by the tube clamping body 2.

Subsequently, the anchor 3 may be pushed into the attachment hole formed in the attaching object until the notched portion 52b of each of the engagement strips 52 can engage the circumferential surface of the attachment hole. Upon engagement of the notched portion 52b, the anchor 3 can be connected to the attaching object, so that the tube clamping body 2 (the corrugated tube clamp 1) can be attached to the attaching object. Thus, the middle diameter corrugated tube 5 can be attached to the attaching object via the corrugated tube clamp 1.

Further, in a condition in which the middle diameter corrugated tube 5 is clamped between the fixed portion 10 and the movable portion 30, the ribs 12a of the fixed portion 10 and the ribs 32a of the movable portion 30 can respectively engage the annular grooves 5b of the middle diameter corrugated tube 5. Therefore, the middle diameter corrugated tube 5 can be effectively prevented from moving in the axial direction.

In this condition, the inner circumferential surfaces 12b and 32b of the ribs 12a and 32a can contact or engage the outer circumferential depressed surfaces 5c of the middle diameter corrugated tube 5 over a limited length thereof because the inner circumferential surfaces 12b and 32b of the ribs 12a and 32a may be shaped to correspond to the outer circumferential depressed surfaces 4c of the large diameter corrugated tube 4. That is, the inner circumferential surfaces 12b and 32b of the ribs 12a and 32a can contact or engage the outer circumferential depressed surfaces 5c of the middle diameter corrugated tube 5 in a substantially point contact manner. As a result, unlike the large diameter corrugated tube 4, the middle diameter corrugated tube 5 held by the tube clamping body 2 cannot be sufficiently stabilized by the engagement between the inner circumferential surfaces 12b and 32b of the ribs 12a and 32a and the outer circumferential depressed surfaces 5c of the middle diameter corrugated tube 5.

However, in this condition, the biasing member 40 formed in the movable portion 30 can be pressed back outwardly by the outer circumferential surface 5a of the middle diameter corrugated tube 5, so as to be elastically flexed outwardly. At this time, the biasing member 40 can be subjected to a substantial pressing (action) force from the outer circumferential surface 5a of the middle diameter corrugated tube 5. As a result, a reaction force (which will be referred to as a biasing member reaction force) can be exerted on the outer circumferential surface 5a of the middle diameter corrugated tube 5 via the biasing member 40. Thus, the middle diameter corrugated tube 5 held by the tube clamping body 2 can be effectively stabilized due to the biasing member reaction force. Therefore, when the middle diameter corrugated tube 5 is subjected to external forces, the middle diameter corrugated tube 5 can be effectively prevented from being easily inclined or displaced with respect to the tube clamping body 2. As a result, the middle diameter corrugated tube 5 can be maintained in a predetermined attached position on the attaching object. Further, similar to the large diameter corrugated tube 4, the middle diameter corrugated tube 5 can be prevented from rattling or moving in the tube clamping body 2.

Further, in order to attach the small diameter corrugated tube 6 to the attaching object using the corrugated tube clamp 1, the small diameter corrugated tube 6 may be positioned on the fixed portion 10 of the tube clamping body 2. Thereafter, the movable portion 30 may be rotated about the hinge 20 to close the tube clamping body 2. As a result, as shown in FIG. 4, the third engagement claw 38 formed in the movable portion 30 can engage the engagement strip 14 of the fixed portion 10, so that the tube clamping body 2 can be fastened. Thus, the small diameter corrugated tube 6 can be clamped between the fixed portion 10 and the movable portion 30, so as to be held by the tube clamping body 2.

Subsequently, the anchor 3 may be pushed into the attachment hole formed in the attaching object until the notched portion 52b of each of the engagement strips 52 can engage the circumferential surface of the attachment hole. Upon engagement of the notched portion 52b, the anchor 3 can be connected to the attaching object, so that the tube clamping body 2 (the corrugated tube clamp 1) can be attached to the attaching object. Thus, the small diameter corrugated tube 6 can be attached to the attaching object via the corrugated tube clamp 1.

Further, in a condition in which the small diameter corrugated tube 6 is clamped between the fixed portion 10 and the movable portion 30, the ribs 12a of the fixed portion 10 and the ribs 32a of the movable portion 30 can respectively engage the annular grooves 6b of the small diameter corrugated tube 6. Therefore, the small diameter corrugated tube 6 can be effectively prevented from moving in the axial direction.

In this condition, the inner circumferential surfaces 12b and 32b of the ribs 12a and 32a can contact or engage the outer circumferential depressed surfaces 6c of the small diameter corrugated tube 6 over a limited length thereof because the inner circumferential surfaces 12b and 32b of the ribs 12a and 32a may be shaped to correspond to the outer circumferential depressed surfaces 4c of the large diameter corrugated tube 4. That is, the inner circumferential surfaces 12b and 32b of the ribs 12a and 32a can contact or engage the outer circumferential depressed surfaces 6c of the small diameter corrugated tube 6 in a substantially point contact manner. As a result, unlike the large diameter corrugated tube 4, the small diameter corrugated tube 6 held by the tube clamping body 2 cannot be sufficiently stabilized by the engagement action between the inner circumferential surfaces 12b and 32b of the ribs 12a and 32a and the outer circumferential depressed surfaces 6c of the small diameter corrugated tube 6.

However, in this condition, the biasing member 40 formed in the movable portion 30 can be pressed back outwardly by the outer circumferential surface 6a of the small diameter corrugated tube 6, so as to be elastically flexed outwardly. At this time, the biasing member 40 can be subjected to a substantial pressing (action) force from the outer circumferential surface 6a of the small diameter corrugated tube 6. As a result, a reaction force (which will be referred to as a biasing member reaction force) can be exerted on the outer circumferential surface 6a of the small diameter corrugated tube 6 via the biasing member 40. Thus, the small diameter corrugated tube 6 held by the tube clamping body 2 can be effectively stabilized due to the biasing member reaction force. Therefore, when the small diameter corrugated tube 6 is subjected to external forces, the small diameter corrugated tube 6 can be effectively prevented from being easily inclined or displaced with respect to the tube clamping body 2. As a result, the small diameter corrugated tube 6 can be maintained in a predetermined attached position on the attaching object. Further, similar to the large diameter corrugated tube 4, the small diameter corrugated tube 6 can be prevented from rattling or moving in the tube clamping body 2.

According to the corrugated tube clamp 1 thus constructed, each of the large, middle and small diameter corrugated tubes 4, 5 and 6 can be attached to the attaching object while it is securely held by the tube clamping body 2. Therefore, each of the large, middle and small diameter corrugated tubes 4, 5 and 6 attached to the attaching object using the corrugated tube clamp 1 can be maintained in the predetermined attached position on the attaching object even when it is subjected to external forces.

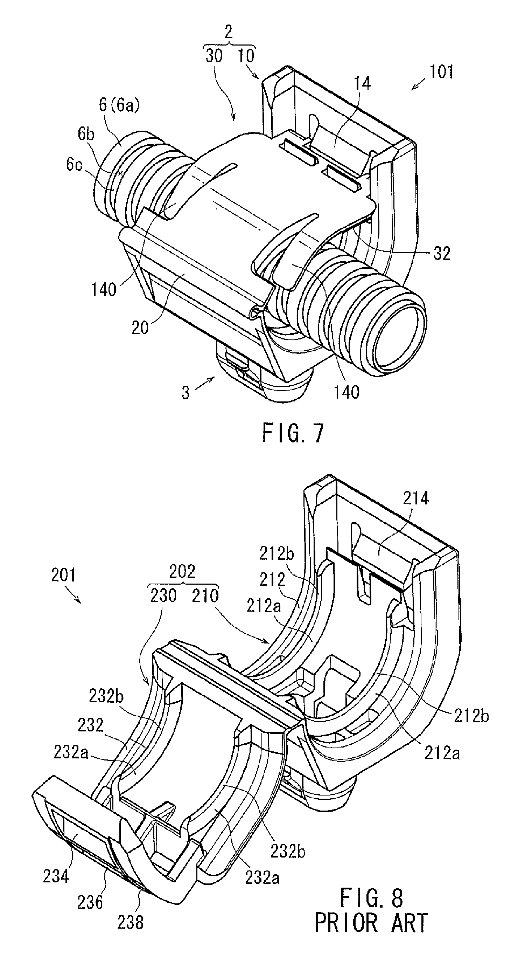

The second detailed representative embodiment will now be described with reference to FIG. 7.

Because the second embodiment relates to the first embodiment, only the constructions and elements that are different from the first embodiment will be explained in detail. Elements that are the same in the first and second embodiments will be identified by the same reference numerals and a detailed description of such elements may be omitted.

In this embodiment, similar to the first embodiment, a corrugated tube clamp 101 may have the substantially same structure as the corrugated tube clamp 1 of the first embodiment with the exception of the biasing member 40. That is, similar to the corrugated tube clamp 1 of the first embodiment, the corrugated tube clamp 101 may include the tube clamping body 2 and the attachment leg or anchor 3. The tube clamping body 2 may have the fixed portion 10 and the movable portion 30. However, unlike the first embodiment, the movable portion 30 may have two biasing members 140 instead of the single biasing member 40. The biasing members 140 may respectively be separately formed in widthwise side portions of the movable portion 30.

Similar to the biasing member 40, each of the biasing members 140 may be formed as a cantilevered strip that is projected inwardly beyond the inner circumferential surface 32 of the movable portion 30. Therefore, as shown in FIG. 7, when the small diameter corrugated tube 6 can be clamped between the fixed portion 10 and the movable portion 30, the biasing members 140 can respectively be pressed back outwardly by the outer circumferential surface 6a of the small diameter corrugated tube 6, so as to be elastically flexed outwardly. At this time, the biasing members 140 can respectively be subjected to two separate pressing (action) forces from the outer circumferential surface 6a of the small diameter corrugated tube 6. As a result, unlike the first embodiment, two separate reaction forces (which will be referred to as biasing member reaction forces) can be separately exerted on the outer circumferential surface 6a of the small diameter corrugated tube 6 via the biasing members 140. The same is true of the large diameter corrugated tube 4 and the middle diameter corrugated tube 5.

The corrugated tube clamp 101 thus constructed may have substantially the same function as the corrugated tube clamp 1 of the first embodiment. That is, according to the corrugated tube clamp 101 of the second embodiment, each of the large, middle and small corrugated tubes 4, 5 and 6 can be attached to the attaching object while it is securely held by the tube clamping body 2. Therefore, each of the large, middle and small diameter corrugated tubes 4, 5 and 6 attached to the attaching object using the corrugated tube clamp 101 can be maintained in the predetermined attached position on the attaching object even when it is subjected to external forces.

Further, according to the corrugated tube clamp 101, as previously described with reference to FIG. 7, in a condition in which the corrugated tube 6 is clamped between the fixed portion 10 and the movable portion 30, the two separate biasing member reaction forces can be separately exerted on the outer circumferential surface 6a of the small diameter corrugated tube 6 via the biasing members 140. Therefore, the corrugated tube 6 can be further stabilized in the tube attaching body 2. The same is true of the large diameter corrugated tube 4 and the middle diameter corrugated tube 5.

Naturally, various changes and modifications may be made to the corrugated tube clamps 1 and 101. For example, each of the corrugated tube clamps 1 and 101 is configured such that three different diameter corrugated tubes (the large, middle and small diameter corrugated tubes 4, 5 and 6) can be clamped and held by the tube clamping body 2. However, each of the corrugated tube clamps 1 and 101 can be modified such that various (two and four or more) different diameter corrugated tubes can be clamped by the tube clamping body 2. In this case, the number of the engagement claws formed in the movable portion 30 may preferably determined depending on the types of the intended corrugated tubes.

Further, in the embodiments, each of the biasing member 40 and the biasing members 140 is formed in such a way that it can be pressed back by each of the outer circumferential surfaces 4a, 5a and 6a of the large, middle and small corrugated tubes 4, 5 and 6 when each of which is clamped between the fixed portion 10 and the movable portion 30. However, each of the biasing member 40 and the biasing members 140 can be changed in such a way that it can be pressed back by each of the outer circumferential surfaces 5a and 6a of the middle and small corrugated tubes 5 and 6 when each of which is clamped between the fixed portion 10 and the movable portion 30. Further, each of the biasing member 40 and the biasing members 140 can be changed in such a way that it can be pressed back only by the outer circumferential surface 6a of the small corrugated tube 6 when it is clamped between the fixed portion 10 and the movable portion 30. That is, each of the biasing member 40 and the biasing members 140 may be formed in such a way that it can be pressed back by the outer circumferential surface 6a of at least the small corrugated tube 6 when it is clamped between the fixed portion 10 and the movable portion 30.

Further, in the embodiments, each of the biasing member 40 and the biasing members 140 is formed as a cantilevered strip. However, each of the biasing member 40 and the biasing members 140 can be formed as a both ends supported strip (i.e., a strip supported at both ends). Further, the shape and the number of the biasing member 40 and the biasing members 140 can be appropriately changed as necessary. In addition, in the embodiments, the biasing member 40 and the biasing members 140 are respectively formed in the movable portion 30 of the tube clamping body 2. However, the biasing member 40 and the biasing members 140 can respectively be formed in the fixed portion 10 of the tube clamping body 2 or each of the movable portion 30 and the fixed portion 10 of the tube clamping body 2.

Representative examples of the present invention have been described in detail with reference to the attached drawings. This detailed description is merely intended to teach a person of skill in the art further details for practicing preferred aspects of the present invention and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present invention.

## Claims

1. A corrugated tube clamp, comprising:
a fixed portion (10) capable of being connected to an attaching object,
a movable portion (30) hinged to the fixed portion (10),
ribs (12a, 32a) respectively formed in the fixed portion (10) and the movable portion (30), and
at least one biasing member (40; 140) formed in at least one of the fixed portion (10) and the movable portion (30),
wherein the fixed portion (10) and the movable portion (30) are shaped to clamp and hold each of corrugated tubes (4, 5, 6) of different diameters therebetween,
wherein the ribs (12a, 32a) are respectively shaped to engage grooves (4b, 5b, 6b) formed in an outer circumferential surface (4a, 5a, 6a) of each of the corrugated tubes (4, 5, 6) of different diameters, and
wherein the at least one biasing member (40; 140) is shaped to be pressed back by an outer circumferential surface (6a) of at least the corrugated tube (6) with the smallest diameter when it is clamped between the fixed portion (10) and the movable portion (30).

2. The corrugated tube clamp as defined in claim 1, wherein the ribs (12a, 32a) are respectively shaped such that inner circumferential surfaces (12b, 32b) thereof have the substantially same curvature as bottom surfaces (4c) of the grooves (4b) formed in the corrugated tube (4) with the largest diameter.

3. The corrugated tube clamp as defined in claim 1, wherein the at least one biasing member (40; 140) comprises a single biasing member (40) formed as a cantilevered strip that is projected inwardly beyond an inner circumferential surface (32) of the movable portion (30).

4. The corrugated tube clamp as defined in claim 1, wherein the at least one biasing member (40; 140) comprises two biasing members (140) formed as cantilevered strips that are respectively projected inwardly beyond an inner circumferential surface (32) of the movable portion (30).

5. The corrugated tube clamp as defined in claim 1, wherein the at least one biasing member (40; 140) is shaped to be pressed back by an outer circumferential surface (4a, 5a, 6a) of each of the corrugated tubes (4, 5, 6) of different diameters when it is clamped between the fixed portion (10) and the movable portion (30).
